# EUROPEAN PATENT APPLICATION

(11) **EP 0 695 064 A1**
(43) Date of publication of application: **31.01.1996**
(21) Application number: 95305153.9
(22) Date of filing: 24.07.1995
(51) Int. Cl.: H04L 25/06

(54) **Data recovery apparatus and method**

(30) Priority: 26.07.1994 US 280791
(71) Applicant: ADVANCED MICRO DEVICES INC., Sunnyvale, California 94088-3453 (US)
(72) Inventor: Magana, Javier, V., Austin, Texas 78727-5232 (US)
(74) Representative: Picker, Madeline Margaret

(57) **Abstract**

An apparatus for data recovery is disclosed. The apparatus recovers digital information from radio frequency information. An analog signal, indicative of the radio frequency and having a wave form of positive peaks and negative peaks about a DC bias point, is input to the apparatus. The apparatus includes circuitry (60,62) for determining a first mid-level analog wave form based on the positive peaks of the wave form of the input analog signal, circuitry (64,66) for determining a second mid-level analog wave form based on the negative peaks of the wave form of the input analog signal, a summing block (68) for summing the first mid-level analog wave form and the second mid-level analog wave form to obtain a new analog signal which is more symmetrical about the DC bias point than the analog signal input to the apparatus, and a slicer circuit (54) block that squares the new analog signal from to yield the digital information for the baseband processor.

## Description

This application is related to the following European Patent applications:
European Patent Application No. 93305465.2 claiming priority from USSN 07/917,497 (our reference HRW/TT0139)
European Patent Application No. 93305458.7 claiming priority from USSN 07/917,489 (our reference HRW/TT0140)
European Patent Application No. 93305450.4 claiming priority from USSN 07/917.488 (our reference PCCS/TT0141)
European Patent Application No. 93305457.9 claiming priority from USSN 07/917,503 (our reference PCCS/TT0142)
European Patent Application No. 93305466.0 claiming priority from USSN 07/918,627 (our reference HRW/TT0143)
European Patent Application No. 93305459.5 claiming priority from USSN 07/918,626 (our reference PCCS/TT0144)
European Patent Application No. 93305482.7 claiming priority from USSN 07/918,625 (our reference PCCS/TT0145)
European Patent Application No. 93305454.6 claiming priority from USSN 07/418,624 (our reference PCCS/TT0146)
European Patent Application No. 93305461.1 claiming priority from USSN 07/918,631 (our reference HRW/TT0147)
European Patent Application No. 93305456.1 claiming priority from USSN 07/918,632 (our reference HRW/TT0148)
European Patent Application No. 93305449.6 claiming priority from USSN 07/918,622 (our refernece PCCS/TT0149)
European Patent Application No. 93305453.8 claiming priority from USSN 07/918,621 (our reference HRW/TT0150)
European Patent Application No. 95300695.4 (our reference PCCS/TT0410)
European Patent Application No. 95300694.7 (our reference PCCS/TT0411)
European Patent Application No. 95300696.2 (our reference PCCS/TT0412)
European Patent Application No. 95300697.0 (our reference PCCS/TT0413)
European Patent Application No. 95300698.8 (our reference PCCS/TT0414)
European Patent Application No. 95300689.7 (our reference PCCS/TT0415)
European Patent Application No. 95300691.3 (our reference PCCS/TT0416)
European Patent Application No. 95300690.5 (our reference PCCS/TT0417)
European Patent Application No. 95300692.1 (our reference PCCS/TT0418)
European Patent Application No. 95303041.8 (our reference PCCS/TT0425)

All of these applications are in the name of the present applicant and are hereby incorporated herein in their entirety by this reference thereto.

The invention relates to conversion of radio frequency (RF) signals to digital pulse signals for a baseband processing device We will describe a device and method for establishing and maintaining a midlevel of demodulated RF data, thereby providing reliable data recovery in digital form to a baseband processor.

Radio frequency signals occur in the portion of the electromagnetic spectrum that is between the audio-frequency portion and the infrared portion, e.g., roughly 10 kHz to 100,000 MHz. Within this frequency range electromagnetic radiation may be detected and amplified as an electric current at the wave frequency. Many electronic devices transmit and receive radio frequency signals. An example of such devices is a cordless telephone. A cordless telephone typically includes a base unit, connected with a telephone communication system, and a remote unit, which is separate from and communicates with the base unit. The remote unit and base unit of such a cordless telephone often communicate via radio frequency signals to allow a user to receive from and speak into the remote unit when located some distance away from the base unit.

Radio frequency waves, when amplified as an electric current, are analog signals. These analog signals vary in a continuous manner. The information content of the signals is conveyed by the value or magnitude of some characteristics of the signal, such as amplitude, phase, or frequency of a voltage. The information is read by comparing the value or magnitude to a standard or reference.

Radio frequency waves, and their electrical analogs, may be symmetrical or asymmetrical. A symmetrical analog signal is one that has a waveform that oscillates at approximately equivalent intervals and approximately equivalent offsets about a dc bias point, i.e., a reference level. An asymmetrical analog signal, on the other hand, is one having a waveform that oscillates at differing intervals and/or differing offsets about the dc point.

It is generally known that there may be advantages with certain electronic devices in converting an analog signal to a digital signal for purposes of processing the data indicated by those signals. For example, the analog signal, due to its continuously varying nature, may not yield sufficiently accurate information determinations in certain instances. It may, therefore, be desirable in those instances to convert the analog signal to a digital signal. A digital signal may allow for greater accuracy in certain instances because the information content of a digital signal is concerned only with discrete states of the signal, typically, high or low, rather than magnitude as with analog signals. The digital signal is given meaning by assigning numerical values or other information to the various possible combinations of the discrete states of the signal.

One means for converting an analog signal to a digital signal is a circuit referred to as a slicer. A slicer in effect "squares up" an input analog signal to yield a digital signal having only one of two states: a high or a low. An example of a device in which a slicer has been used in the past is a cordless telephone. As mentioned, cordless telephones typically consist of a base unit and a remote unit, which units communicate via transmitted and received RF signals. The base unit and the remote unit often perform certain operations with or on the information carried by the transmitted and received RF signals. Because it is desirable in certain instances to convert those RF signals to digital signals, those units have at times included slicer circuits for performing the conversion of analog to digital.

In those applications in which a slicer circuit has been used to perform conversion of analog information to digital information, the resulting digital signal has at times only been an accurate reflection of the analog signal if the analog signal was symmetrical. This has particularly been the case, for example, if the digital signal is utilized by a baseband processor of a device. In such a device, the baseband processor looks at the transitions, that is the "squares" of the signal output from the slicer, as indication of where the data bits of the digital signal begin and where they end. A symmetrical analog signal to the slicer will be output from the slicer as a digital signal of somewhat uniform pulse width because the transitions are uniform. A asymmetrical analog signal to the slicer, however, will be output from the slicer as a digital signal of varied pulse width.

As the pulse width of a digital signal varies, the pulse width may, in some instances, become so narrow that the pulse is not recognized as a pulse. This is the case because processor devices typically include a phase lock loop which operates according to a particular bit.period in accordance with particular design. If the pulse width of a digital signal becomes narrow in relation to the bit period, the phase lock loop may not allow for detection of the pulse. If a pulse is not detected, bit errors may occur in the processor. It is, therefore, preferable to maintain pulse width of a digital signal as close as possible to the bit period of the phase lock loop.

One particular application in which this problem of narrow pulse width may be presented is in digital cordless telephones, such as those previously mentioned. More specifically, digital cordless telephones conforming to the current draft of the European cordless telephone standard, the CT2 (cordless telephone second generation) standard, may exhibit the problem. According to that standard, RF signals between the base unit and the remote unit are time division duplexed. That is, transmission and reception by each of the base unit and the remote unit occurs in bursts. For example, in one burst, the base unit may be transmitting and the remote unit may be receiving and, in a next burst, the base unit may be receiving and the remote unit may be transmitting. In this manner, a single frequency band is employed for communication between base unit and remote unit, with timing of receiving and transmission of the units being successively synchronized.

The burst signals in the CT2 standard cordless telephones can result in reception of asymmetrical baseband analog signals between the base unit and remote unit, and vice versa. During the reception of a burst (whether by base unit or remote unit, as the case may be), a greater amplitude signal may first be detected by the receiving unit, then the amplitude detected decreases during the continuance of the burst until the end of the burst. Therefore, the analog signal received (whether by remote unit or base unit, as the case may be) is asymmetrical. In these devices, then, if the analog signal is converted to digital signal by means of a slicer circuit in accordance with prior practices, pulse width of the digital signal varies and may become so narrow that bit errors result.

A better understanding of an instance of this problem of narrow pulse width may be gained by reference to the related applications listed above, which related applications describe one possible embodiment of a baseband processor for cordless telephone base and remote units, conforming to the CT2 standard in which bit errors of the type described herein could occur. The CT2 standard prescribes a 10 kHz offset with respect to receiving RF signals between base unit and remote unit and a 13.88 microsecond baseband bit period. If the level of the received RF signal and, thus, analog signal, varies from the offset, the bit period may deviate from that of design. If pulse width of the digital signal obtained from the "squared up" analog signal becomes quite narrow, the signal transitions may not be detected by the baseband device and bit errors could result. The present invention, as hereinafter more fully described, overcomes these problems.

Clearly, it is an advantage in the art and technology to eliminate these problems and provide better baseband data recovery. The present invention provides just such an advantage. Though the background of the invention has been described, in part, with respect to cordless telephone application, and, in particular, to application with the devices and methods described in the related applications listed above, the invention has other and varied application as will be hereinafter more fully understood.

One embodiment of the invention is an apparatus for data recovery. The apparatus recovers digital information from an input analog signal. The input analog signal has a wave form of positive peaks and negative peaks about a DC bias point. The apparatus comprises first circuitry for determining a first mid-level of the positive peaks of the wave form of the input analog signal, second circuitry for determining a second mid-level of the negative peaks of the wave form of the input analog signal, a summer, connected to each of the first circuitry and the second circuitry, for summing the first mid-level and the second mid-level to yield a second analog signal, the second analog signal being more symmetrical about the DC bias point than the input analog signal, and a slicer circuit, connected to the summer, for squaring the second analog signal from the summer to yield the digital information.

In another aspect, the digital information is supplied to a baseband processor and the digital information has a pulse width approaching a bit period of the baseband processor.

In yet another aspect, the first circuitry for determining a first mid-level comprises a positive peak detect block for determining each of the positive peaks and adding a time constant to yield the first mid-level tracking an envelope of the positive peaks and wherein the second circuitry for determining a second mid-level comprises a negative peak detect block for determining each of the negative peaks and adding a time constant to yield the second mid-level tracking an envelope of the negative peaks.

In another aspect, the first circuitry comprises an input, a first positive peak resistor connected to the input, a first positive peak transistor connected to the input, a first negative peak resistor connected to the input, a first negative peak transistor connected to the input, a second positive peak resistor connected to the first positive peak transistor, a first positive peak capacitor connected to the first positive peak transistor, a second positive peak transistor connected to the first positive peak transistor, a second negative peak resistor connected to the first negative peak transistor, a first negative peak capacitor connected to the first negative peak transistor, a second negative peak transistor connected to the first negative peak transistor, a third positive peak resistor connected to the second positive peak transistor, and a third negative peak resistor connected to the second negative peak transistor.

In yet another aspect, the first circuitry and the second circuitry comprise at least one buffer.

In a further aspect, the slicer circuit is a comparator.

In yet a further aspect, the second positive peak transistor and the second negative peak transistor are each connected to the summer.

In even a further aspect, the first positive peak resistor, the first positive peak transistor and the third positive peak resistor are each connected to a voltage source and the first negative peak resistor, the first negative peak transistor and the third negative peak resistor are also each connected to the voltage source.

In yet another further aspect, the second positive peak resistor, the first positive capacitor, the second transistor, the first negative peak resistor, the first negative peak transistor, the first negative peak capacitor, and the third negative peak resistor are each connected to the voltage source.

Another embodiment of the invention is a method of recovering digital information from an input analog signal. The input analog signal has a wave form of positive peaks and negative peaks about a DC bias point. The method comprising the steps of determining a first mid-level of the positive peaks of the wave form of the input analog signal, determining a second mid-level of the negative peaks of the wave form of the input analog signal, summing the first mid-level and the second mid-level to yield a second analog signal, the second analog signal being more symmetrical about the DC bias point than the input analog signal, and squaring the second analog signal from the summer to yield the digital information.

In another aspect, the method further includes the step of supplying the digital information to a baseband processor, the digital information having a pulse width approaching a bit period of the baseband processor.

In even another aspect, the step of determining a first mid-level comprises the steps of detecting each of the positive peaks and adding a time constant to yield the first mid-level, the first mid-level tracks an envelope of the positive peaks and wherein the step of determining a second mid-level comprises the steps of detecting each of the negative peaks and adding a time constant to yield the second mid-level, the second mid-level tracks an envelope of the negative peaks.

In a further aspect, the steps of determining a first mid-level and determining a second mid-level comprise at least one step of buffering.

In even a further aspect, the step of squaring includes the step of comparing.

Yet another embodiment of the invention is an apparatus for data recovery. The apparatus recovers digital information from an input analog signal. The input analog signal has a wave form of positive peaks about a DC bias point. The apparatus comprises circuitry for, from time to time, determining a threshold level of the positive peaks of the wave form of the input analog signal, buffer connected with the circuitry for maintaining the threshold level determined from time to time, and slicer circuitry for squaring the input analog signal to yield the digital information, wherein the threshold level determined from time to time is logically calculated based upon the positive peaks.

Even another embodiment of the invention is a method of data recovery. The method serves to recover digital information from an input analog signal. The input analog signal has a wave form of positive peaks about a DC bias point. The method comprises the steps of determining, from to time, a threshold level of the positive peaks of the wave form of the input analog signal, buffering the threshold level determined from time to time, and squaring the input analog signal to yield the digital information.

In another aspect, the method further comprises the step of calculating the threshold level from time to time based upon the positive peaks.

Another embodiment of the invention is an apparatus for providing digital data to a baseband processor. The baseband processor is operationally timed according to a particular bit period. The apparatus receives an input of demodulated radio frequency data. The apparatus minimizes bit errors in such digital data. The apparatus comprises first circuit block for detecting first peaks of the radio frequency to yield a first analog waveform, second circuit block for detecting second peaks of the radio frequency to yield a second analog waveform, and third circuit block, connecting the first peak detecting circuitry and the second peak detecting circuitry, the third circuit block operating to yield a third analog waveform based on the first analog waveform and the second analog waveform, the third analog waveform being substantially symmetrical and having a frequency near the bit period of the baseband processor.

In another aspect, the apparatus further comprises fourth circuit block, connected with the third circuit block, the fourth circuit block operating to square the third analog waveform to yield the digital data.

Yet another embodiment of the invention is a method of providing digital data to a baseband processor. The baseband processor is operationally timed according to a particular bit period. The method minimizes bit errors in the digital data. The method comprises the steps of inputting demodulated radio frequency data, detecting first peaks of the radio frequency data, determining a first analog waveform from the first peaks detected, detecting second peaks of the radio frequency data, determining a second analog waveform from the second peaks detected, and determining a third analog waveform from the first analog waveform and the second analog waveform, the third analog waveform being substantially symmetrical and having a frequency near the bit period of the baseband processor.

In another aspect the method further comprises the step of squaring the third analog waveform to yield the digital data.

### BRIEF DESCRIPTION OF THE DRAWINGS

For a more complete understanding of the present invention, and for further objects and advantages thereof, reference may now be had to the following detailed description, taken in conjunction with the accompanying drawings, wherein:
FIG. 1 is a simplified block illustration of a base unit and remote unit of a cordless telephone of the prior art, each such unit comprising an RF module and a digital processor;
FIG. 2 is a simplified block schematic of the RF module of the prior art base unit and remote unit of FIG. 1;
FIG. 3 is an exemplary demodulated asymmetrical analog signal and a digital signal corresponding thereto as obtained as output from a slicer circuit of the prior art base unit and remote unit of FIG. 1;
FIG. 4 is a simplified block schematic of an embodiment of a data recovery averaging circuit according to the present invention;
FIG. 5 is an exemplary demodulated asymmetrical analog signal, identical to that of FIG. 3, and a digital signal corresponding thereto as obtained as output from the data recovery averaging circuit according to the embodiment of the present invention illustrated in FIG. 4; and
FIG. 6 is a detailed schematic of a preferred embodiment of the data recovery averaging circuit of FIG. 5.

In the following detailed description, reference is made to cordless telephones and, in particular, the cordless telephone described in the related applications listed above. These references are intended for illustrative purposes only and should be considered as exemplary of application of the invention. The invention, nevertheless, has broad application in any instance in which reliable data recovery upon conversion of RF signals to digital signals is desired.

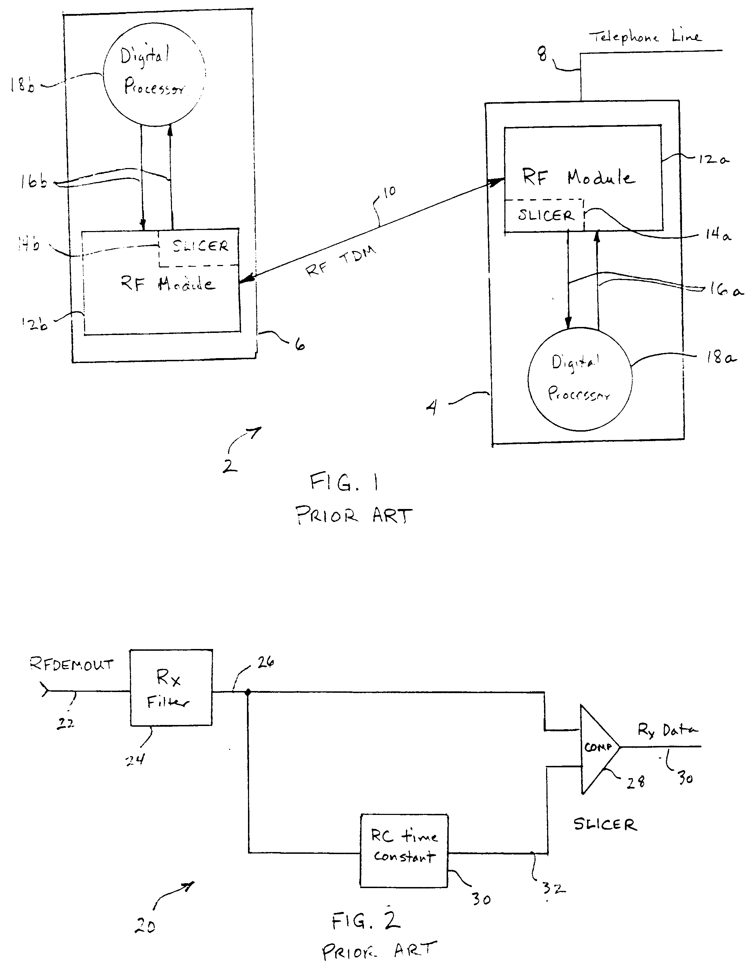

Referring first to FIG. 1, a base unit 4 and remote unit 6 of a cordless telephone 2 is simply illustrated. The base unit 4 consists of, among other parts and peripherals, an RF module 12a, digital communication lines 16a, and a digital processor 18a. The remote unit 6 likewise consists of an RF module 12b, digital communication lines 16b, and a digital processor 18b. The base unit 4 is connected with a communications system, such as a telephone network, via the telephone line 8. The base unit 4 and remote unit 6 communicate via RF signals 10. These RF signals 10 may be time division duplexed such that both transmissions and receptions by the units 4,6 are via the same RF frequency.

Still referring to FIG. 1, the digital communications lines 16a,16b transfer digital information from the RF modules 12a,12b, respectively, to the digital processors 18a,18b. The digital information is obtained by conversion of the RF signals 10 transmitted and received by the RF modules 12a,12b to digital signals. In an exemplary operation, the RF module 12a of the base unit 4 transmits information by RF signals 10 to the RF module 12b of the remote unit 6. Note that this requires that the base unit 4 be in transmit mode while the remote unit 6 is in receive mode. The opposite is the case when, instead, the remote unit 6 is transmitting and the base unit 4 is receiving.

Continuing to refer to FIG. 1, as those skilled in RF communications will appreciate and understand, the RF signals 10 are modulated to a carrier by the transmitting RF module, either 12a or 12b, and are demodulated by the receiving RF module, either 12b or 12a, respectively. Assuming for purposes of illustration that the base unit 4 is transmitting and the remote unit 6 is receiving, the base unit receives information via signals across the telephone line 8. These signals, if information to be communicated to a user, are modulated to a carrier via the RF module 12a and transmitted as RF signals 10 to the RF module 12b of the remote unit 6. At the RF module 12b of the remote unit 6, the RF signals 10 are received and demodulated. The RF module, then, by means of a slicer circuit 14b thereof "squares up" an analog signal corresponding to the RF signals 10 received. These "squared up" analog signals are passed as digital information to the digital processor 18b of the remote unit via lines 16b.

Further referring to FIG. 1, the digital information is processed via the digital processor 18b. The remote unit 6 may then serve to transmit information to the base unit 4. In so doing, information to be transmitted is passed to the RF module 12b and modulated by the RF module 12b to a carrier to yield RF signals 10. These RF signals 10 are transmitted to the RF module 12a of the base unit 4. At the RF module 12a of the base unit 4, analog signals corresponding to received RF signals 10 are "squared up" via a slicer circuit 14a of the RF module 12a. These "squared up" analog signals are passed to the digital processor 18a as digital information via lines 16a.

Further referring to FIG. 1, the base unit 4 and remote unit 6 may include and/or be attached to a variety of peripherals and other elements. Some of the typical peripherals include a keypad, a speaker, a microphone, an antenna, and others. The description of these units 4,6 herein is, therefore, intended only for purposes of description of an application of an embodiment of the present invention. For more details regarding cordless telephones and aspects thereof, reference is hereby made to the related applications listed above. The related applications describe particular aspects of cordless telephones conforming to the CT2 standard. The present invention is believed to be particularly effective when employed in connection with the cordless telephones described in the related applications, however, application of the present invention is not and should not be considered limited to such employment. As earlier stated, the present invention has broad and varied application in any instance in which reliable data recovery upon conversion of RF signals to digital signals is desired.

Now referring to FIG. 2, an A/D conversion circuit 20 of an RF module 12a or 12b of the base unit 4 or remote unit 6, respectively, is illustrated in block form. The illustration shows the prior device and method employed for converting received RF signals 10 to digital data for use by a processor (e.g., 18a or 18b of FIG. 1). The input 22 to the circuit 20 is the RF signals 10 which have been demodulated (not shown in detail) at the RF module 12a or 12b. This input 22 passes to a receiver filter 24 which serves to filter the input 22 to yield a more symmetrical analog wave form 26. This wave form 26 passes to a comparator 28 which serves as a slicer for "squaring up" the analog signal. The output 26 also passes to an RC time constant block 30 which provides the DC bias point signal 32 to the comparator 28. The comparator 28 compares the wave form 26 and bias point 32 to yield a "squared up" signal which is digital data 30. This digital data 30 may then be read and understood by a processor (not shown in FIG. 2) or other digital device.

Continuing to refer to FIG. 2, the digital data 30 to the processor is so derived from an analog signal 22. Accuracy of the digital data 30 as representing RF signals 10 (see FIG. 1) from which analog input 22 is derived depends on several factors. One such factor may be symmetry of the analog signals derived from the RF signals 10. If the analog signals are symmetrical with respect to both frequency and offset about a DC bias point, then pulse width of the digital data 30 obtained from "squaring" of the analog signal by means of the A/D conversion circuit 20 will be relatively uniform. If the pulse width, then, of the digital data 30 approximates the bit period of the processor, the processor will accurately detect the bits exhibited by the "squared" signal.

Still referring to FIG 2, if, however, the analog signals are asymmetrical about a DC bias point, then pulse width of the digital data 30 will not be uniform. In that instance, if pulse width of the digital data 30 becomes narrow with respect to the bit period of an associated processor, the narrow pulse may not be accurately detected by the processor. This is particularly the case with a baseband processor in which a phase lock loop cooperates to determine digital information from the digital data 30. In that instance, the processor looks at the transitions to determine where the data bits begin and where they end. As the pulse width, and thus the transitions, become narrow in relation to the bit period, the phase lock loop may make a wrong determination of the information received. For example, instead of seeing a bit as a 1, it may see the bit as a 0. This may result in bit errors. Therefore, maintaining an adequate pulse width of digital data 30 will minimize bit errors and so is desirable. This, as will hereinafter be more fully discussed, is the basic concept of the present invention.

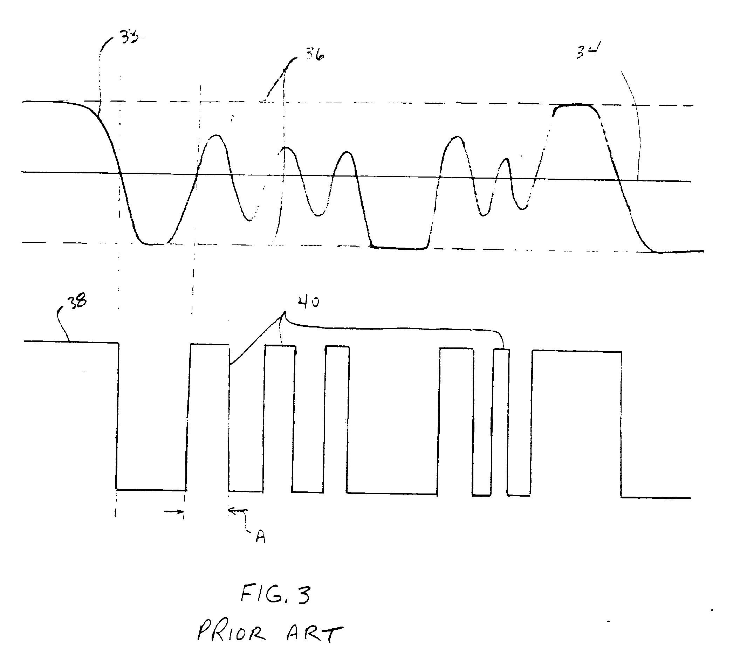

Now referring to FIG. 3, a demodulated asymmetrical analog signal 33 (exemplary of signal 26 in FIG. 2) and a digital data signal 38 (exemplary of signal 30 in FIG. 2) derived therefrom by "squaring" via the A/D conversion circuit 20 of the prior technology are shown. The wave form of the analog signal 33 is seen to generally transition around a DC bias point 34. Offsets 36 to the DC bias point 34, which, for example, may be dictated by design requirements, are shown at either side of the DC point 34. Though applications may vary, the analog signal 33 may be thought of as indicative of an RF signal received by a cordless telephone base unit or remote unit, which cordless telephone conforms to the CT2 standard.

Still referring to FIG. 3, the digital data signal 38 derived from "squaring" of the analog signal 33 via a prior art A/D conversion circuit 20 like that of FIG. 2 is shown. At the transitions of the analog signal 33 at the DC bias point 34, the digital data signal 38 also transitions. It may be noted that, due to asymmetry of the analog signal 33, transitions and thus pulse width A of the pulses 40 of the digital data signal 38 vary. As the transitions of the analog signal 33 occur more frequently, the pulse width A of pulses 40 of the digital data signal 33 may become quite narrow. These narrow pulses 40 may not be correctly understood by an associated processor if pulse width A becomes narrow in relation to the bit period of the processor.

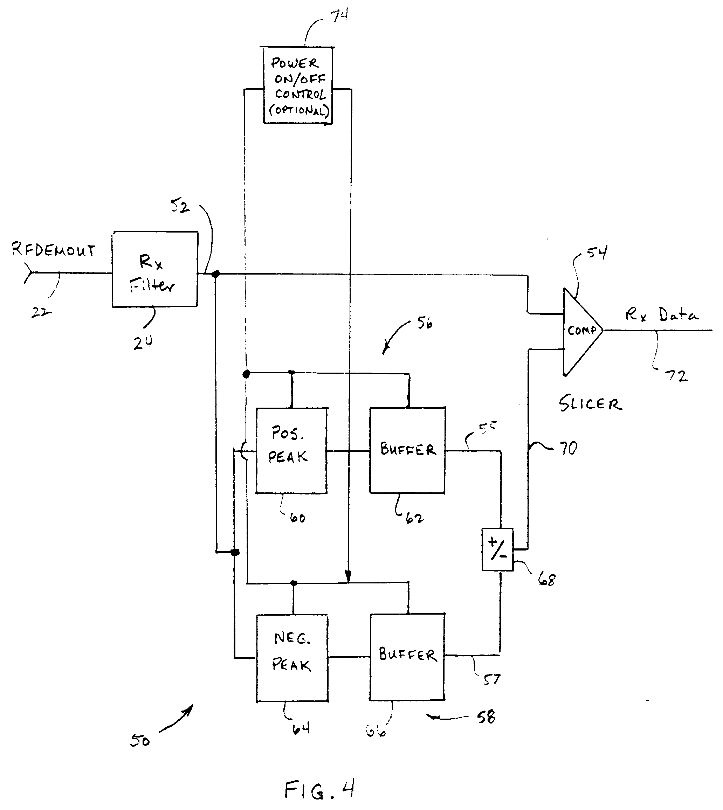

Now referring to FIG. 4, a simplified, block diagram of an embodiment of the baseband received data recovery averaging circuit 50 of the present invention is shown. The input 52 to the averaging circuit 50 is the analog signal 22 filtered by the receiver filter 24 (i.e., the same as the analog wave form 26 of FIG. 2). The input 52 is fed to a comparator 54 and also to each of a positive peak averager 56 and a negative peak averager 58. The positive peak averager 56 comprises a positive peak detect block 60 and a positive peak buffer 62. The negative peak averager 58 comprises a negative peak detect block 64 and a negative peak buffer 66. The results 55, 57 from the positive peak averager 56 and negative peak averager 58 are summed 68 and the resulting sum signal 70 is fed to the comparator 54. The comparator 54, which functions as a slicer circuit, then compares the input 52 and the sum signal 70 to yield a "squared up" digital data signal 72. In the simplified block diagram of FIG. 4, the positive peak averager 56 and negative peak averager 58 are powered by an optional On/Off Control 74, which may be of the type which is the subject of related U.S. Patent Application Ser. No. 08/280,610 , titled Power On/Off Control Circuit and Method, of the same inventor.

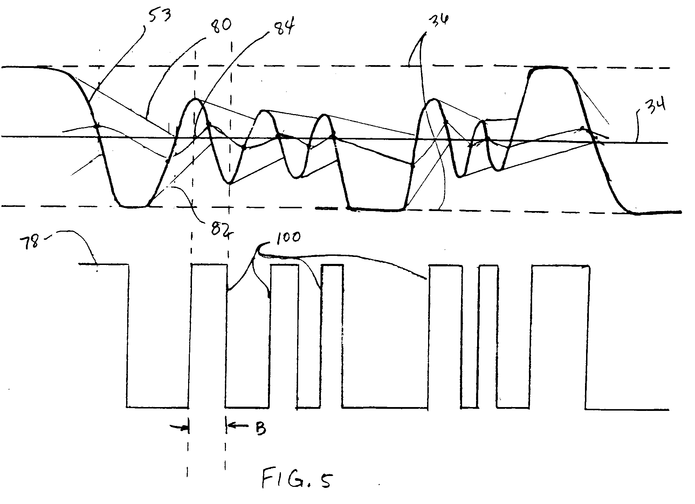

Next referring to FIG. 5 in conjunction with FIG. 4, the concepts carried out by the embodiment of the baseband received data recovery averaging circuit 50 may be understood. In the prior technology, "squaring" of an analog signal to achieve a digital pulse signal has been accomplished by transitioning digital pulses of the digital pulse signal at the instant that the analog wave form of the analog signal transitions about a DC bias point. As heretofore described, when the analog signal is asymmetrical, the transitions may yield narrow pulse width pulses. These narrow pulse width pulses may not be detected correctly by a processor operating according to a relatively broader bit period. Thus, bit errors may occur in devices. The present averaging circuit 50, rather than transitioning pulses at the analog signal transitions, tries to maintain a more equivalent difference between peaks and bases the transitioning of pulses on the more equivalent difference. More specifically, the present averaging circuit 50 minimizes how narrow the pulse width of digital pulses may be, thereby optimizing the recovery of data by a baseband processor.

Still referring to FIGS. 4 and 5 in conjunction, the present averaging circuit 50 tracks the envelope of the positive peaks and negative peaks of an analog waveform 53 (note that the analog waveform 53 is identical to the wave form 33 of FIG. 3, but that the resulting digital data signal 78 differs from the digital data signal 38 of FIG.3). This tracking of the envelope provides two waveforms 80,82, one characteristic of the envelope of the positive peaks and the other characteristic of the envelope of the negative peaks, respectively. These two waveforms 80,82 remain somewhere in the middle of the peaks of the analog waveform 53, and when summed 68 by the circuit 50, yield an analog waveform 84 with transitions of more uniform frequency, yet maintain the transitions necessary for "squaring" by the comparator 54 of the circuit 50. The two waveforms 80,82 characteristic of the envelope of the positive and negative peaks are generated by the positive peak detect block 60 and positive peak buffer 62 and the negative peak detect block 64 and negative peak buffer 66, respectively. In effect, each block 60,64 operates by detecting a peak (either positive or negative, as the case may be) and then supplying an RC time constant. That information is then buffered at the buffers 62,66 (as applicable). Once the information is buffered, the results from the positive peak averager 56 and the negative peak averager 58 are summed 68, with the result supplied to the comparator 54. In this manner, the wave form 84 of the resulting sum signal 70 supplied to the comparator 54 remains somewhere in the middle about the DC bias point 34, and extremes of the offset 36 are not reached by the waveform 84. By so establishing and maintaining a wave form 84 of the resulting sum signal 70 within the middle of the amplitude extremes, more uniform transition frequencies are maintained, yet relative positive negative peaks are maintained. "Squared up" digital data signals 72 available to an associated processor, then, exhibit more uniform pulse width readable by the processor with respect to the bit period thereof, and so bit errors are reduced.

Now referring to FIG. 5 alone, a demodulated asymmetrical analog signal 53 (exemplary of signal 52 in FIG. 4, and identical to analog signal 33 of the prior art of FIG. 3) and a digital data signal 78 (exemplary of signal 72 in FIG. 4) derived therefrom by "squaring" via the averaging circuit 50 of the embodiment of the present invention are shown. The wave form of the analog signal 53 is seen to generally transition around a DC bias point 34. Offsets 36 to the DC bias point 34, extremes for which, for example, may be dictated by design requirements, are shown at either side of the DC point 34. Though applications may vary, the analog signal 53 may be thought of as indicative of an RF signal received by a cordless telephone base unit or remote unit, which cordless telephone conforms to the CT2 standard. In that instance, the maximum offsets 36 may be 10 kHz.

Still referring to FIG. 5, the digital data signal 78 derived from "squaring" of the analog signal 84, obtained as the sum of the envelope wave forms via the averaging circuit 50 of the embodiment of the invention, is shown. At the transitions of the analog signal at the DC bias point 34, the digital data signal 78 also transitions. It may be noted that, because the analog signal 84 obtained from the sum of the envelope wave forms 80, 82 remains within a relatively close range of the DC bias point 34, the transitions of the signal 84 occur at more equal frequency than with the analog signal 53. Thus, pulse width B of the pulses 100 of the digital data signal 78 are relatively uniform. In this manner, narrow pulse widths not detectable by the baseband processor are minimized and pulse widths are maintained relatively close to the bit period of the processor. This reduces bit errors in the devices.

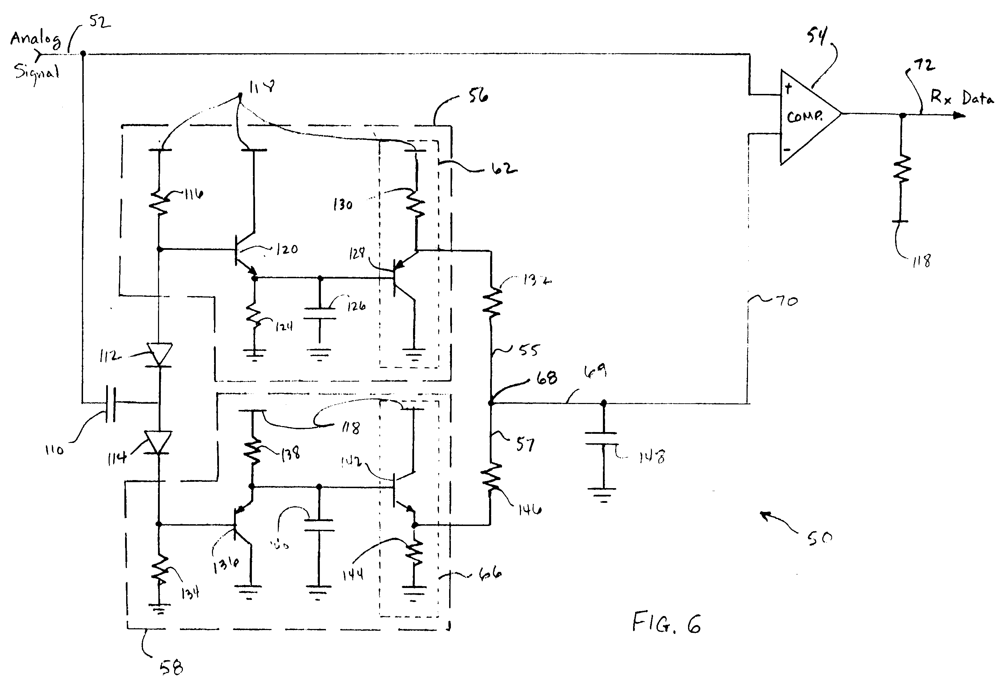

Now referring to FIG. 6, a detailed schematic of one embodiment of the baseband received data recovery averaging circuit 50 is illustrated. This embodiment of the circuit 50 may have varied and numerous application, however, it is believed that the embodiment is particularly effective when employed with a base unit and remote unit of a cordless telephone, and, more particularly, when that cordless telephone conforms to the CT2 standard, for example, such as the cordless telephone and related systems and methods described in the related applications. As previously mentioned, the CT2 standard specifies time division duplexed transmission and reception of RF signals between base unit and remote unit. Each transmission and reception therefore consists of a burst of data information in the form of RF signals. As was also previously mentioned, such burst transmission by one unit may result in receipt of asymmetrical signals once demodulated at the RF module of the other unit. These asymmetrical signals, when converted to digital signals by the receiving unit, may consist of narrow pulse width pulses which are not necessarily understood by the baseband processor. Bit errors are, therefore, possible in the devices.

Still referring to FIG. 6, the embodiment of the circuit 50 minimizes the possibility of bit errors in devices, such as those shown in the related applications. Sizes of elements of the circuit 50 hereinafter stated will be suitable for application to the cordless telephone and related devices described in those related applications. In the circuit 50 embodiment, the analog input 52 feeds the comparator 54 and the baseband received data recovery averaging circuit 50 elements. The analog input 52 to the circuit 50 elements first passes to a 0.68µF capacitor 110. The capacitor 110 is connected with a first diode 112 and a second diode 114. The first diode connects with a 4.3K resistor 116 supplied by a voltage source V_{cc} 188. The resistor 116 and first diode 112 are connected with the base of a first npn transistor 120, the collector of which is supplied by the voltage source 118 and the emitter of which is connected with a 4.75K resistor 124, a 0.1µF capacitor 126, and the base of a first pnp transistor 128. The emitter of the first pnp transistor 128 is connected to a 2.21K resistor 130 and a 4.75K resistor 132. The voltage source 118 supplies resistor 130. The collector of the transistor 128 is connected to ground. The second diode 114 is connected with a 4.3K resistor 134 and the base of a second pnp transistor 136. The transistor 136 has its collector connected to ground and its emitter connects with a 4.75K resistor 138, a 0.1µF capacitor 140, and the base of a second npn transistor 142. The resistor 138 is supplied by voltage source 118. The emitter of the transistor 142 is connected with a 2.21K resistor 144 and a 4.75K resistor 146. The signal 55 across resistor 132 and the signal 57 across resistor 146 are summed 68 at the summing point. The summed signal 69 connects with a 4700pF capacitor 148 and the comparator 54. The comparator 54 yields a digital data signal 72.

Based upon the foregoing, those skilled in the art will fully understand and appreciate the advantages exhibited by the teachings herein. Those skilled in the art will also understand and appreciate that various alternatives, additions, and modifications may be made in embodiments and, in particular, the preferred embodiment described herein. Further details of related systems, apparatus and methods may be found in the related cases listed in the Cross-Reference to Related Applications section above. Although those related details are not necessary in every case for those skilled in the art to practice the present invention or to comprehend its best mode of practice, those details may be useful to those skilled in the art and reference to them may be desirable.

Various alternative embodiments and variations of the embodiment of the baseband received data recovery averaging circuit 50 of the invention are possible. One such possible alternative embodiment includes the incorporation of a power control with the circuit 50, such as, for example, the Power On/Off Control of related U.S. Patent Application Serial No. 08/280,610 , of the same inventor. The power control may serve to limit power consumption by the circuit 50.

Other alternative embodiments according to the concepts of the present invention are possible. One such alternative embodiment functions as a window detect. In the embodiment, rather than employing a plus or minus peak detect, only one peak detect, i.e., either a positive or negative peak detect, may be employed. In that instant, only a single RC time constant and a single buffer would be required. This embodiment could employ a voltage divider to slice up the analog signal, taking the positive peaks as the high threshold and the mid-range (i.e., DC point) as the low threshold. Such an embodiment would detect only the positive peaks.

Another alternative embodiment according to the present invention could utilize digital logic to determine thresholds and accomplish switching in respect of those thresholds. In such an embodiment, whenever the analog waveform crosses a certain threshold point, either the upper threshold or lower threshold, as applicable, could be the result. Such automatic switching between upper threshold and lower threshold could provide even more optimum data recovery. A downside of this alternative, however, may be that CMOS logic (or other) is necessary and, thus, space on-board would be necessary to accommodate the logic circuitry.

As has been previously stated, the invention and the embodiments thereof have widespread application to any instance where analog information is converted to digital information. Another exemplary application is radar which detects distances by RF signals which are converted to digital for baseband processing. Though the description herein addresses primarily cordless telephone application, the description should not be considered limited to that application as the invention may be effective in any instance of conversion of analog data to digital data must be accomplished with a high level of data recovery accuracy.

Numerous other modifications and variations of the embodiments and, in particular, the preferred embodiment of the invention are possible in light of the teachings herein. Each of these modifications and variations is intended to be included in the description herein and forms a part of the present invention. The foregoing detailed description is, thus, to be clearly understood as being given by way of illustration and example only, the spirit and scope of the present invention being limited solely by the appended claims.

## Claims

1. An apparatus for data recovery, said apparatus recovering digital information from an input analog signal, said input analog signal having a wave form of positive peaks and negative peaks about a DC bias point, comprising:
first circuitry for determining a first mid-level of said positive peaks of said wave form of said input analog signal;
second circuitry for determining a second mid-level of said negative peaks of said wave form of said input analog signal;
summer, connected to each of said first circuitry and said second circuitry, for summing said first mid-level and said second mid-level to yield a second analog signal, said second analog signal being more symmetrical about said DC bias point than said input analog signal; and
slicer circuit, connected to said summer, for squaring said second analog signal from said summer to yield said digital information.

2. The apparatus of claim 1, wherein said digital information is supplied to a baseband processor and said digital information has a pulse width approaching a bit period of said baseband processor.

3. The apparatus of claim 1, wherein said first circuitry for determining a first mid-level comprises a positive peak detect block for determining each of said positive peaks and adding a time constant to yield said first mid-level tracking an envelope of said positive peaks and wherein said second circuitry for determining a second mid-level comprises a negative peak detect block for determining each of said negative peaks and adding a time constant to yield said second mid-level tracking an envelope of said negative peaks.

4. The apparatus of claim 1, wherein said first circuitry comprises:
an input;
a first positive peak resistor connected to said input;
a first positive peak transistor connected to said input;
a first negative peak resistor connected to said input;
a first negative peak transistor connected to said input;
a second positive peak resistor connected to said first positive peak transistor;
a first positive peak capacitor connected to said first positive peak transistor;
a second positive peak transistor connected to said first positive peak transistor;
a second negative peak resistor connected to said first negative peak transistor;
a first negative peak capacitor connected to said first negative peak transistor;
a second negative peak transistor connected to said first negative peak transistor;
a third positive peak resistor connected to said second positive peak transistor; and
a third negative peak resistor connected to said second negative peak transistor.

5. The apparatus of claim 3, wherein said first circuitry and said second circuitry comprises at least one buffer.

6. The apparatus of claim 4, wherein said slicer circuit is a comparator.

7. The apparatus of claim 4, wherein said second positive peak transistor and said second negative peak transistor are each connected to said summer.

8. The apparatus of claim 7, wherein said first positive peak resistor, said first positive peak transistor and said third positive peak resistor are each connected to a voltage source and said first negative peak resistor, said first negative peak transistor and said third negative peak resistor are also each connected to said voltage source.

9. The apparatus of claim 8, wherein said second positive peak resistor, said first positive capacitor, said second transistor, said first negative peak resistor, said first negative peak transistor, said first negative peak capacitor, and said third negative peak resistor are each connected to said voltage source.

10. A method of recovering digital information from an input analog signal, said input analog signal having a wave form of positive peaks and negative peaks about a DC bias point, comprising the steps of:
determining a first mid-level of said positive peaks of said wave form of said input analog signal;
determining a second mid-level of said negative peaks of said wave form of said input analog signal;
summing said first mid-level and said second mid-level to yield a second analog signal, said second analog signal being more symmetrical about said DC bias point than said input analog signal; and
squaring said second analog signal from said summer to yield said digital information.

11. The method of claim 10, further including the step of supplying said digital information to a baseband processor, said digital information having a pulse width approaching a bit period of said baseband processor.

12. The method of claim 10, wherein said step of determining a first mid-level comprises the steps of detecting each of said positive peaks and adding a time constant to yield said first mid-level, said first mid-level tracks an envelope of said positive peaks and wherein said step of determining a second mid-level comprises the steps of detecting each of said negative peaks and adding a time constant to yield said second mid-level, said second mid-level tracks an envelope of said negative peaks.

13. The method of claim 10, wherein said steps of determining a first mid-level and determining a second mid-level comprise at least one step of buffering.

14. The method of claim 10, wherein said step of squaring includes the step of comparing.

15. An apparatus for data recovery, said apparatus recovering digital information from an input analog signal, said input analog signal having a wave form of positive peaks about a DC bias point, comprising:
circuitry for, from time to time, determining a threshold level of said positive peaks of said wave form of said input analog signal;
buffer connected with said circuitry for maintaining said threshold level determined from time to time; and
slicer circuitry for squaring said input analog signal to yield said digital information;
wherein said threshold level determined from time to time is logically calculated based upon said positive peaks.

16. A method of data recovery, said method serving to recover digital information from an input analog signal, said input analog signal has a wave form of positive peaks about a DC bias point, comprising the steps of:
determining, from to time, a threshold level of said positive peaks of said wave form of said input analog signal;
buffering said threshold level determined from time to time; and
squaring said input analog signal to yield said digital information.

17. The method of claim 16, further comprising the step of calculating said threshold level from time to time based upon said positive peaks.

18. An apparatus for providing digital data to a baseband processor, said baseband processor operationally timed according to a particular bit period, said apparatus receiving an input of demodulated radio frequency data, said apparatus minimizing bit errors in such digital data, comprising:
first circuit block for detecting first peaks of said radio frequency to yield a first analog waveform;
second circuit block for detecting second peaks of said radio frequency to yield a second analog waveform; and
third circuit block, connecting said first peak detecting circuitry and said second peak detecting circuitry, said third circuit block operating to yield a third analog waveform based on said first analog waveform and said second analog waveform, said third analog waveform being substantially symmetrical and having a frequency near said bit period of said baseband processor.

19. The apparatus of claim 18, further comprising fourth circuit block, connected with said third circuit block, said fourth circuit block operating to square said third analog waveform to yield said digital data.

20. A method of providing digital data to a baseband processor, said baseband processor operationally timed according to a particular bit period, said apparatus minimizing bit errors in such digital data, comprising the steps of:
inputting demodulated radio frequency data;
detecting first peaks of said radio frequency data;
determining a first analog waveform from said first peaks detected;
detecting second peaks of said radio frequency data;
determining a second analog waveform from said second peaks detected; and
determining a third analog waveform from said first analog waveform and said second analog waveform, said third analog waveform being substantially symmetrical and having a frequency near said bit period of said baseband processor.

21. The method of claim 20, further comprising the step of squaring said third analog waveform to yield said digital data.
